Europäisches Patentamt

European Patent Office

Office européen des brevets

(11) Veröffentlichungsnummer: **0 176 995 B1**

(12) **EUROPÄISCHE PATENTSCHRIFT**

(45) Veröffentlichungstag der Patentschrift: **18.09.91**

(51) Int. Cl.⁵: **H02B 13/02**, H02B 1/18

(21) Anmeldenummer: 85112326.5

(22) Anmeldetag: 28.09.85

(54) Verbindungsvorrichtung für eine Kabelmess- und Prüfungseinrichtung.

(30) Priorität: 02.10.84 DE 3436084

(43) Veröffentlichungstag der Anmeldung:
09.04.86 Patentblatt 86/15

(45) Bekanntmachung des Hinweises auf die
Patenterteilung:
18.09.91 Patentblatt 91/38

(84) Benannte Vertragsstaaten:
AT BE CH DE FR GB IT LI LU NL SE

(56) Entgegenhaltungen:
EP-A- 0 054 726
DE-A- 3 538 210
FR-A- 2 351 522
FR-A- 2 548 473

(73) Patentinhaber: **Karl Pfisterer Elektrotechnische Spezialartikel GmbH & Co. KG
Augsburger Strasse 375
W-7000 Stuttgart 60(DE)**

(72) Erfinder: **Bogner, Albert, Ing. (grad.)
Gmünder Strasse 10/1
W-7060 Schorndorf(DE)**
Erfinder: **Bäulere, Gottfried, Ing. (grad.)
Postweg 2
W-7012 Fellbach-Schmieden(DE)**

(74) Vertreter: **Held, Martin, Dr.-Ing. et al
Patentanwälte Bartels, Fink, Held Lange
Strasse 51
W-7000 Stuttgart 1(DE)**

## Beschreibung

Die Erfindung betrifft eine Vorrichtung zum Verbinden einer Kabelmeß- und Prüfeinrichtung mit isolierten Kabeln eines Mittelspannungsenergieversorgungsnetzes, welche die Merkmale des Oberbegriffs des Anspruches 1 aufweist.

Bei einer bekannten Vorrichtung dieser Art (FR-A 2 351 522) sind der außerhalb der gekapselten Schaltanlage liegende Teil des den Erdungs- und Prüfkontakt tragenden Durchführungsisolators und der über ihn überstehende Erdungs- und Prüfkontakt durch eine oberhalb des Durchführungsisolators an der Gehäusewand festgelegte Abdeckhaube geschützt, die in Verängerung der Längsachse des Durchführungsisolators mit einem Fenster versehen ist, durch das hindurch das Meß- und Prüfkabel eingeführt wird. Seitlich an dem über den Durchführungsisolator überstehenden Erdungs- und Prüfkontakt liegt, wenn dieser geerdet ist, ein Erdungselement an, das oberhalb des Erdungs- und Prüfkontaktes an der Abdeckhaube angeordnet ist. Eine sichere Durchführung einer Kabelprüfung und/oder Kabelmessung, zu der auch die Herstellung einer zuverlässigen Verbindung zwischen dem Meß- und Prüfkabel und dem Erdungs- und Prüfkontakt gehört, so lange letzterer noch geerdet ist, ist mit dieser Vorrichtung nicht möglich.

Der Erfindung liegt daher die Aufgabe zugrunde, eine Vorrichtung der eingangs genannten Art zu schaffen, welche ausnahmslos, also auch dann, wenn in dem zu prüfenden Kabel eine Spannung durch ein anderes Leitersystem induziert wird, ein gefahrloses Herstellen der Verbindung zwischen der Kabelmeß- und Prüfeinrichtung sowie dem Erdungs- und Prüfkontakt ermöglicht. Diese Aufgabe löst eine Vorrichtung mit den Merkmalen des Anspruches 1.

Da die erfindungsgemäße Vorrichtung einen sicheren Anschluß eines Meß-und Prüfkabels im geerdeten Zustand des Erdungs- und Prüfkontaktes zulässt, kann stets der Anschluß des Meß- und Prüfkabels erfolgen, ehe die Erdung des Erdungs- und Prüfkontaktes aufgehoben wird. Außerdem kann das Meß- und Prüfkabel, beispielsweise über die Meß- und Prüfeinrichtung, geerdet werden, ehe die Erdung durch die dem Erdungs- und Prüfkontakt zugeordnete Erdungsvorrichtung aufgehoben wird, so daß auch diese Trennung völlig gefahrlos durchgeführt werden kann.

Die Ausbildung der Anschlußvorrichtung des Erdungs- und Prüfkontaktes ist in verschiedener Weise möglich. Einen minimalen Aufwand verursacht eine in die mit einem Gewinde versehene Bohrung eingreifeude Klemmschraube, mittels deren beispielweise ein am Ende des Meß- und Prüfkabels vorgesehener Kabelschuh an die Kontaktfläche angepresst werden kann. Die Anschlußvorrichtung kann aber auch als Steckverbindung ausgebildet sein, bei welcher in die Bohrung ein Bolzen eingeführt wird. Ein solcher Bolzen kann Teil eines Adapters sein, an den das eine Ende des Meß- und Prüfkabels anschließbar ist. Bei einer bevorzugten Ausführungsform ist der Bolzen im Adapter um seine Längsachse drehbar, aber axial unverschiebbar gelagert, wobei der aus dem Adapter herausragende Teil des Bolzens mit einem Gewinde versehen ist, das in die mit einem korrespondierenden Gewinde versehene Bohrung im Erdungs- und Prüfkontakt eingeschraubt werden kann. Eine solche Ausbildung der Verbindungsvorrichtung ist zwar aufwendiger als ei ne Klemmschraube, jedoch aus Sicherheitsgründen einer Klemmschraube vorzuziehen. Infolge der drehbaren Lagerung des den Gewindezapfen bildenden Bolzens im Adapter ist das Herstellen der Verbindung zwischen dem Kabel und dem Prüfpunkt sowie das Lösen dieser Verbindung ohne Schwierigkeiten möglich. Es braucht nämlich hierzu nicht auch das Kabel um seine Längsachse gedreht zu werden. Schließlich ist diese erfindungsgemäße Lösung auch insofern vorteilhaft, als der Adapter so ausgebilet sein kann, daß jegliche in Frage kommende Art von Meß- und Prüfkabel mit ihm ohne Schwierigkeiten verbunden werden kann, weil hierzu nur eine mechanische und elektrische Verbindung zwischen der Kabelseele und dem sich beim Herstellen oder Lösen der Verbindung mit dem Prüfkontakt nicht drehenden Teil des Adapters erforderlich ist.

Bei einer bevorzugten Ausführungsform ist der Adapter gemäß Anspruch 5 ausgebildet. Die Seele des Meß- und Prüfkabels braucht dann nur zum Herstellen der Verbindung mit dem Adapter in dessen Klemmvorrichtung eingelegt und dort festgeklemmt zu werden.

Um den Aufwand für den Adapter möglichst gering zu halten, ist vorteilhafterweise gemäß Anspruch 7 zur Kontaktierung des Bolzens ein Viellinienkontaktelement vorgesehen.

Um ohne Schwierigkeiten den Gewindezapfen in der Gewindebohrung des Prüfkontaktes festziehen und auch wieder lösen zu können, ist der Bolzen zweckmäßigerweise gemäß Anspruch 9 mit einem als Mehrkant ausgebildeten Abschnitt versehen, an den ein Gabelschlüssel angesetzt werden kann.

Eine bevorzugte Ausführungsform weist gemäß Anspruch 10 eine elektrisch isolierende Schutzhaube auf, mit der nach der Herstellung der Verbindung mit dem Prüfkontakt alle Spannung führenden Teile abgedeckt werden können.

Das Erdungselement hat vorzugsweise eine Ausbildung gemäß Anspruch 11, da der Aufwand für einen solchen Schwenkarm gering und seine Betätigung einfach ist.

Im folgenden ist die Erfindung anhand eines in der Zeichnung dargestellten Ausführungsbeispiels im einzelnen erläutert.

Es zeigen:

Fig. 1    eine unvollständig dargestellte Ansicht des Ausführungsbeispiels im Zustand während der Herstellung der Verbindung mit einem Prüfpunkt einer ebenfalls unvollständig und teilweise schematisch dargestellten Schaltanlage,

Fig. 2    eine unvollständig dargestellte Ansicht des Ausführungsbeispiels im Zustand der betriebsbereiten Verbindung mit dem Prüfpunkt und der entsprechend Fig. 1 dargestellten Schaltanlage,

Fig. 3    einen unvollständig dargestellten Längsschnitt des Ausführungsbeispiels im Zustand der betriebsbereiten Verbindung mit dem Prüfpunkt,

Ein geschlossenes, metallisches und geerdetes Gehäuse 1 einer Mittelspannungsschaltanlage, das wenigstens einen Last- oder Leistungsschalter 2 sowie wenigstens einen Erdungsschalter 3 enthält, dessen einer Pol mit dem einen Pol des Last- und Leistungsschalters 2 und mit einer Kabelanschlußvorrichtung 4 verbunden ist, die den Anschluß eines Kabels 6, beispielsweise mittels eines Kabelsteckers 5 von außen her ermöglicht. Der andere Pol des Erdungsschalters 3 ist mit einem Erdungs- und Prüfkontakt 7 elektrisch leitend verbunden, welcher an der vom Gehäuse 1 wegweisenden Stirnseite eines Durchführungsisolators 8 angeordnet ist, der am Gehäuse 1 festgelegt ist und von dessen einer Seitenwand nach außen absteht. Der Erdungs- und Prüfkontakt 7 ist ein Körper aus einem elektrisch gut leitenden Material, der teilweise in den Durchführungsisolator 8 eingreift, über dessen freie Stirnfläche jedoch etwas übersteht und hier eine ebene Kontaktfläche 7' bildet, welche parallel zu der den Durchführungsisolator 8 tragenden Wand des Gehäuses 1 liegt, so daß die Längsachse des Durchführungsisolators 8 lotrecht auf der Kontaktfläche 7'steht.

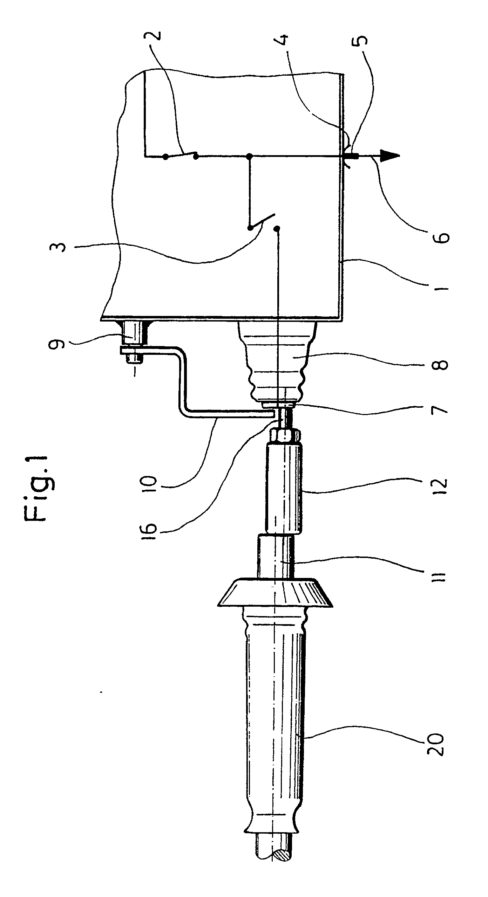

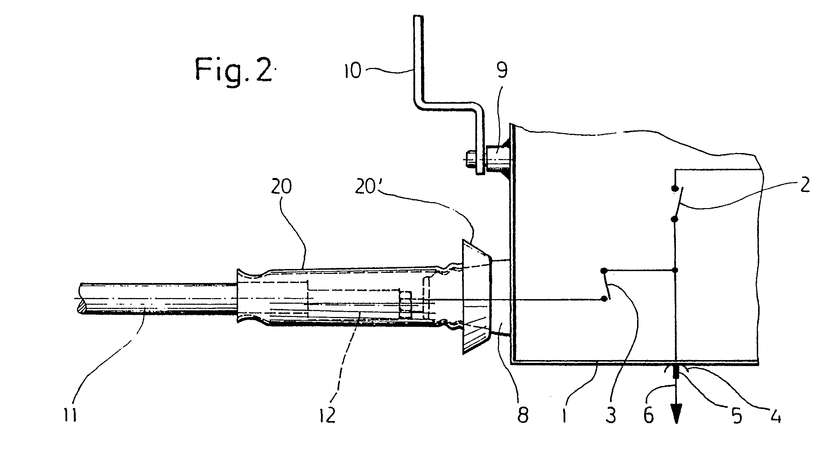

Im Abstand neben dem Durchführungsisolator 8 ist ein Schwenklager 9 an der Außenseite des Gehäuses 1 vorgesehen, dessen Schwenkachse parallel zur Längsachse des Durchführungsisolators 8 liegt. An dieses auf Erdpotential liegende Schwenklager 9 ist das eine Ende eines im Ausführungsbeispiel doppelt abgekröpften Schwenkhebels 10 angelenkt, der aus einer Schiene aus elektisch gut leitendem Material geformt ist und, wie Fig. 1 zeigt, in eine Lage geschwenkt werden kann, in der sein anderer Endabschnitt mit dem erforderlichen Kontaktdruck an der Kontaktfläche 7' des Prüfpunktes 7 anliegt. Sofern die Erdung des Erdungs- und Prüfkontakts 7 beseitigt werden soll, wird dieser Schwenkhebel 10 in eine andere Schwenklage gebracht, wie dies Fig. 2 zeigt, in welcher er die Kontaktfläche 7' freigibt.

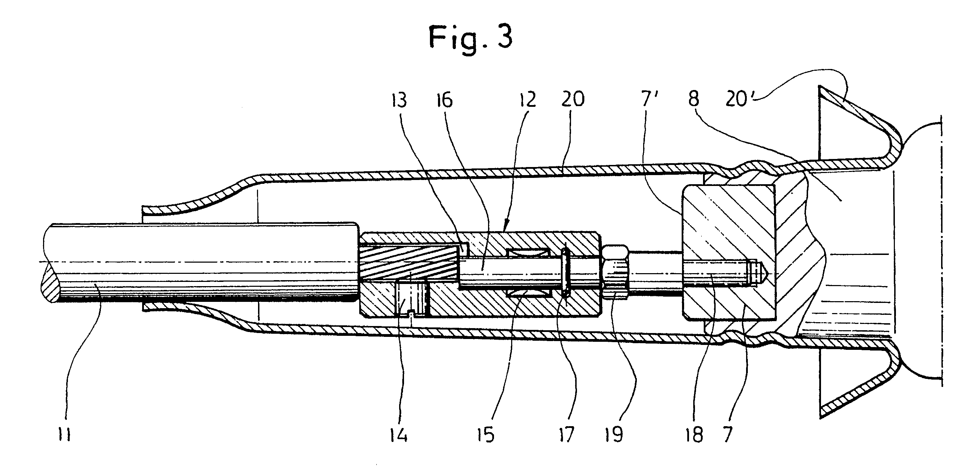

Wie Fig. 1 zeigt, läßt der Schwenkhebel 10, wenn er in der Erdungsstellung steht, einen Teil der Kontaktfläche 7' frei. In diesem freigelassenen Bereich der Kontaktfläche 7' mündet eine von der Kontaktfläche aus lotrecht in den Erdungs-und Prüfkontakt 7 eindringende Gewindebohrung, wie dies Fig. 3 zeigt.

Wie Fig. 3 ferner zeigt, ist das eine Ende eines Meß- und Prüfkabels 11, dessen anderes Ende beispielsweise mit einem Meßwagen verbunden ist, abisoliert und in eine Bohrung eines Adapters 12 eingesteckt, der aus einem elektrisch gut leitenden Material besteht und eine stabartige Form hat. Die das Kabelende aufnehmende Bohrung 13 des Adapters 12 erstreckt sich in dessen Längsrichtung, ist jedoch exzentrisch angeordnet, damit eine Querbohrung genügend lang ist, die in die Bohrung 13 mündet und eine Klemmschraube 14 aufnimmt.

Der Adapter 12 weist eine zentrale Längsbohrung auf, welche sich von den Bohrung 13 bis zu dem vom Kabelende wegweisenden Ende erstreckt. In die diese Bohrung begrenzende Wandung ist eine Ringnut eingestochen, in die ein hülsenförmiges Viellinienkontaktelement 15 eingelegt ist. Dieses Kontaktelement 15 stellt eine elektrisch leitende Verbindung her zwischen einem in der Bohrung drehbar gelagerten, aus elektrisch gut leitendem Material bestehendem Bolzen 16 und dem Adapter 12. Ein O-Ring 17, der in je eine Ringnut des Adapters und des Bolzens 16 eingelegt ist, sichert diesen gegen eine axiale Verschiebung relstiv zum Adapter 12, ohne die Drehbarkeit des Bolzens 16 zu behindern.

Der Bolzen 16 ragt aus dem Adapter 12 heraus und hat einen im Durchmesser verminderten Endabschnitt, welcher als ein Gewindezapfen 18 ausgebildet ist, der in die Gewindebohrung des Prüfpunktes 7 eingedreht werden kann, bis die an der Absetzung gebildete Ringschulter an der Kontaktfläche 7' anliegt, wie dies Fig. 3 zeigt. Ein zwischen der dem Kabel abgekehrten Stirnseite des Adapters 12 und dem Gewindezapfen 18 liegender Abschnitt des Bolzens 16 ist als Sechskant 19 ausgebildet, um für das Eindrehen des Gewindezapfens 18 in die Gewindebohrung des Erdungs- und Prüfkontaktes 7 und das Herausdrehen einen Gabelschlüssel ansetzen zu können.

Auf dem Meß- und Prüfkabel 11 ist längsverschiebbar eine im wesentlichen hohlzylindrische Schutzhaube 20 aus elektrisch isolierendem Material angeordnet. Nur der eine, in Fig. 3 links dargestellte Endabschnitt ist eingezogen und liegt lose am Meß- und Prüfkabel 11 an. Im übrigen umgibt die Schutzhaube 20 den Adapter 12 im Abstand, und der andere Endabschnitt, der in einem außen ein Stück weit zurückgeführten Randstreifen 20' endet, hat einen Durchmesser, der ein Überschieben der Schutzhaube 20 über den Durchführungsisolator 8 gestattet und dabei die Schutzhaube 20 in Anlage an den Durchführungsisolator 8 kommen läßt, wie dies Fig. 3 zeigt. Im Ausführungsbeispiel hat dieser Endabschnitt der Schutzhaube 20 sogar ringnutartige Einziehungen, welche in korrespondierende Rillen des Durchführungsisolators 8 federnd einrasten und dadurch die Schutzhaube 20 gegen eine unbeabsichtigte Verschiebung relativ zum Durchführungsisolator sichern. Die Schutzhaube 20 erlaubt es also, wie Fig. 3 zeigt, nicht nur den Adapter 12 und dessen Bolzen 16, sondern auch den Erdungs- und Prüfkontakt 7 und den Durchführungsisolator 8 berührungssicher abzudecken.

Normalerweise ist der Erdungs- und Prüfkontakt 7 mittels des Schwenkhebels 10 geerdet, wie dies Fig. 1 zeigt, der Erdungsschalter 3 geöffnet und der Last- oder Leistungsschalter 2 geschlossen. Soll eine Prüfung oder Messung des Kabels 6 durchgeführt werden, dann werden zunächst der Last- oder Leistungsschalter 2 geöffnet und der Erdungsschalter 3 geschlossen. Dann wird, während der Prüfpunkt 7 noch durch den Schwenkhebel 10 geerdet ist, der Gewindezapfen 18 in die Gewindebohrung des Erdungs- und Prüfkontakt 7 eingedreht. Dabei ist das Meß- und Prüfkabel 11 an seinem anderen Ende, das beispielsweise mit einem Meßwagen verbunden ist, geerdet. Nach dem Festziehen des Gewindezapfens 18 im Erdungs- und Prüfkontakt 7 wird der Schwenkhebel 10 weggeschwenkt und die Schutzhaube 20 auf den Durchführungsisolator 8 aufgeschoben, wie dies Fig. 2 zeigt. Nun kann die Bedienungsperson auf Sicherheitsabstand gehen und vom Meßwagen her die Erdung des Meß-und Prüfkabels 11 aufheben und die Prüfspannung in das Kabel einspeisen. Nach Beendigung der Messung oder Prüfung wird in umgekehrter Reihenfolge bis zum Herausdrehen des Gewindezapfens 18 aus der Bohrung des Erdungs-und Prüfkontaktes 7 vorgegangen.

## Patentansprüche

1. Vorrichtung zum Verbinden einer Kabelmeß- und Prüfeinrichtung mit isolierenden Kabeln (6) eines Mittelspannungsenergieversorgungsnetzes, die an eine gekapselte Schaltanlage angeschlossen sind, welche für jede Phase wenigstens einen von außen zugänglichen und von einem Isolator (8) getragenen Erdungs- und Prüfkontakt (7) aufweist, der einen von der Schaltanlage wegweisenden, unisolierten Endabschnitt mit einer Kontaktfläche (7') für die Anlage eines auf Erdpotential liegenden Elementes (10) und eine auch in geerdetem Zustand einen lösbaren Anschluß eines Meß- und Prüfkabels (11) gestattende Ausbildung hat, dadurch gekennzeichnet, daß der Endabschnitt des Erdungs- und Prüfkontaktes (7) außerhalb der Kontaktfläche (7') eine Anschlußvorrichtung für das eine Ende des Meß- und Prüfkabels (11) in Form einer Bohrung für die Aufnahme eines zapfenförmigen Verbindungselementes aufweist.

2. Vorrichtung nach Anspruch 1, dadurch gekennzeichnet, daß das zapfenförmige Verbindungselement als Klemmschraube ausgebildet ist, die in ein Gewinde der Bohrung eingreift.

3. Vorrichtung nach Anspruch 1, dadurch gekennzeichnet, daß das das zapfenförmige Verbindungselement durch einen Bolzen (16, 18) mit einem in ein Gewinde der Bohrung einführbaren Gewinde gebildet ist, der an einem Adapter (12) vorgesehen ist, mit dem das eine Ende des Meß- und Prüfkabels (11) verbunden ist.

4. Vorrichtung nach Anspruch 3, dadurch gekennzeichnet, daß der Bolzen (16, 18) im Adapter (12) um seine Längsachse drehbar, aber axial unverschiebbar gelagert ist, wobei der aus dem Adapter (12) herausragende Teil (18) des Bolzens mit einem Gewinde versehen ist, das mit einem in der Bohrung der Anschlußvorrichtung vorgesehenen Gewinde korrespondiert.

5. Vorrichtung nach Anspruch 3 oder 4, dadurch gekennzeichnet, daß der Adapter (12) aus einem elektrisch leitenden Material besteht und eine Klemmvorrichtung (13, 14) für das anzuschließende Ende des Meß- und Prüfkabels (11) aufweist.

6. Vorrichtung nach Anspruch 5, dadurch gekennzeichnet, daß die Klemmvorrichtung einen Klemmkanal (13) und eine in diesen einführbare Klemmschraube (14) aufweist.

7. Vorrichtung nach einem der Ansprüche 3 bis 6, gekennzeichnet durch ein hülsenförmiges, mit seiner Innenmantelfläche am Bolzen (16) und seiner Außenmantelfläche am Adapter (12) anliegendes Viellinienkontaktelement (15).

8. Vorrichtung nach Anspruch 7, dadurch gekennzeichnet, daß das Viellinienkontaktelement (15) in eine Ringnut einer die Lagerung für den Bolzen (16) bildenden Bohrung des Adapters (12) eingelegt ist.

9. Vorrichtung nach einem der Ansprüche 3 bis 8, dadurch gekennzeichnet, daß der über den Adapter (12) überstehende Teil des Bolzens (16) im Bereich zwischen Gewindezapfen (18) und dem Adapter (12) einen als Mehrkant ausgebildeten Abschnitt (19) hat.

10. Vorrichtung nach einem der Ansprüche 1 bis 9, gekennzeichnet durch eine auf dem Meß- und Prüfkabel (11) angeordnete, an ihrem einen Ende offene und zumindest in dem sich an dieses Ende anschließenden Abschnitt das Kabel im Abstand umfassende, elektrisch isolierende Schutzhaube (20), deren Innendurchmesser eine das Überschieben über den Erdungs- und Prüfkontakt (7) gestattende Größe hat.

11. Vorrichtung nach Anspruch 1, dadurch gekennzeichnet, daß das Erdungselement (10) als ein Schwenkarm ausgebildet ist, der um eine zur Längsachse des Isolators (8) parallele Achse zwischen einer Stellung, in der sein freier Endabschnitt die Kontaktfläche (7') des Erdungs- und Prüfungskontaktes (7) kontaktiert, und einer Stellung, in der sich sein freier Endabschnitt im Abstand vom Erdungs- Prüfkontakt (7) befindet, verschwenkbar an der Schaltanlage (1) gelagert ist.

## Claims

1. A device for connecting a cable measuring and testing device to insulating cables (6) of a medium-tension energy supply network, which are connected to a fully enclosed switching system which has for each phase at least one externally accessible earthing and testing contact (7) carried by an insulator (8) and which has pointing away from the switching installation a non-insulated end portion with a contact face (7') for application of an element (10) which is at earth potential and which is of a construction which even in the earthed condition permits of a separable connection of a measuring and testing cable (11), characterised in that the end portion of the earthing and testing contact (7) has outside the contact surface (7') a connecting device for one end of the measuring and testing cable (11) in the form of a bore to accommodate a journal-like connecting element.

2. A device according to claim 1, characterised in that the journal-shaped connecting element is constructed as a clamping screw which engages into a screw thread in the bore.

3. A device according to claim 1, characterised in that the journal-shaped connecting element is constituted by a bolt (16, 18) having a screw thread which can be inserted into a screw thread in the bore and which is provided on an adaptor (12) to which one end of the measuring and testing cable (11) is connected.

4. A device according to claim 3, characterised in that the bolt (16, 18) is mounted in the adaptor (12) to be rotatable about its longitudinal axis but which is axially non-displaceable, the part (18) of the bolt which projects from the adaptor (12) being provided with a screw thread which corresponds to a screw thread provided in the bore of the connecting device.

5. A device according to claim 3 or 4, characterised in that the adaptor (12) consists of an electrically conductive material and has a clamping device (13, 14) for that end of the measuring and testing cable (11) which has to be connected.

6. A device according to claim 5, characterised in that the clamping device has a clamping passage (13) and a clamping screw (14) which can be inserted into it.

7. A device according to one of claims 3 to 6, characterised by a sleeve-shaped multi-line contact element (15) of which the inner surface bears on the bolt (16) while its outer surface bears on the adaptor (12).

8. A device according to claim 7, characterised in that the multi-line contact element (15) is inserted into an annular groove in a bore in the adaptor (12) which forms the mounting for the bolt (16).

9. A device according to one of claims 3 to 8, characterised in that that part of the bolt (16) which projects beyond the adaptor (12) has in the region between the threaded journal (18) and the adaptor (12) a portion (19) which is constructed as a polyhedron.

10. A device according to one of claims 1 to 9, characterised by, disposed on the measuring and testing cable (10), an electrically insulating protective cover (20) which is open at one end and which has at least the portion end adjacent this end enclosing the cable at a distance therefrom, its inside diameter being of a magnitude which allows it to be pushed over the earthing and testing contact (7).

11. A device according to claim 1, characterised in that the earthing element (10) is constructed as a pivot arm which is mounted on the switching system (1) to be pivotable about an axis parallel with the longitudinal axis of the insulator (8) between a position in which its free end portion contacts the contact surface (7') of the earthing and testing contact (7) and a position in which its free end portion is at a distance from the earthing and testing contact (7).

**Revendications**

1. Dispositif de connexion du câble d'un appareil de mesure et de contrôle à des câbles isolés (6) d'un réseau d'alimentation en énergie moyenne tension qui sont raccordés à une installation blindée de distribution qui comprend pour chaque phase au moins un contact (7) de mise à la masse et de contrôle qui est accessible de l'extérieur et supporté par un isolateur (8) et qui comporte une partie extrême non isolée, tournée à l'opposé de l'installation de distribution et comprenant une surface de contact (7') destinée à la mise en application contre elle d'un élément (10) qui est au potentiel de la masse, ledit contact (7) étant conformé pour permettre, même lorsqu'il est à la masse, une connexion amovible d'un câble (11) de mesure et de contrôle, caractérisé en ce que la partie extrême du contact (7) de mise à la masse et de contrôle comporte à l'extérieur de la surface de contact (7') un dispositif de connexion de l'une des extrémités du câble (11) de mesure et de contrôle, ce dispositif ayant la forme d'un trou de logement d'un élément de connexon en forme de tige.

2. Dispositif selon la revendication 1, caractérisé en ce que l'élément de connexion en forme de tige est conformé en vis de serrage s'insérant dans un taraudage du trou.

3. Dispositif selon la revendication 1, caractérisé en ce que l'élément de connexion en forme de tige est formé d'un goujon (16, 18) qui comporte un filetage pouvant s'introduire dans un taraudage du trou et qui est prévu sur un raccord (12) auquel l'une des extrémités du câble (11) de mesure et de contrôle est connectée.

4. Dispositif selon la revendication 3, caractérisé en ce que le goujon (16, 18) est monté rotatif autour de son axe longitudinal dans le raccord (12), mais n'est pas déplaçable axialement dans ce dernier, la partie (18) du goujon qui ressort du raccord (12) comportant un filetage qui correspond à un taraudage prévu dans le trou du dispositif de connexion.

5. Dispositif selon la revendication 3 ou 4, caractérisé en ce que le raccord (12) est en un matériau conducteur de l'électricité et comporte un dispositif (13, 14) de serrage de l'extrémité du câble (11) de de mesure et de contrôle qui doit être raccordée.

6. Dispositif selon la revendication 5, caractérisé en ce que le dispositif de serrage comprend un canal de serrage (13) et une vis de serrage (14) pouvant s'introduire dans ce dernier.

7. Dispositif selon l'une des revendications 3 à 6, caractérisé par un élément de contact à lignes multiples (15) qui est en forme de douille, dont la surface de l'enveloppe intérieure est appliquée contre le goujon (16) et la surface de l'enveloppe extérieure, contre le raccord (12).

8. Dispositif selon la revendication 7, caractérisé en ce que l'élément de contact à lignes multiples (15) est logé dans une gorge annulaire d'un trou du raccord (12) formant le logement du goujon (16).

9. Dispositif selon l'une des revendications 3 à 8, caractérisé en ce que la partie du goujon (16) qui ressort du raccord (12) comprend une partie (19) à pans multiples entre la tige filetée (18) et le raccord (12).

10. Dispositif selon l'une des revendications 1 à 9, caractérisé par une chape de protection électriquement isolante (20) disposée sur le câble (11) de mesure et de contrôle, ouverte à l'une des extrémités et entourant le câble à distance au moins par sa partie qui est dans le prolongement de cette extrémité, le diamètre intérieur de cette chape ayant une dimension permettant de l'emboîter sur le contact (7) de mise à la masse et de contrôle.

11. Dispositif selon la revendication 1, caractérisé en ce que l'élément de mise à la masse (10) est conformé en bras pivotant qui est monté sur l'installation de distribution (1) de manière à pouvoir tourner autour d'un axe parallèle à l'axe longitudinal de l'isolateur (8) entre une position dans laquelle sa partie extrême libre est en contact avec la surface de contact (7') du contact de mise à la masse et de contrôle (7) et une position dans laquelle sa partie extrême libre est à distance du contact (7) de mise à la masse et de contrôle.

Fig.1

Fig.2

# Fig. 3

EP 0 176 995 B1